Europäisches Patentamt

European Patent Office

Office européen des brevets

(19)

(11) **EP 0 530 382 B1**

(12) **EUROPÄISCHE PATENTSCHRIFT**

(45) Veröffentlichungstag und Bekanntmachung des
Hinweises auf die Patenterteilung:
**01.05.1996  Patentblatt 1996/18**

(51) Int Cl.⁶: **G01K 15/00**

(21) Anmeldenummer: **91111043.5**

(22) Anmeldetag: **03.07.1991**

(54) **Verfahren zur Ermittlung der Heizleistung der Heizkörper einer Einrohrheizung**

Method for detecting the heating of the radiators of a heating pipe

Procédé pour détecter le chauffage de radiateurs d'un chauffage à tube

(84) Benannte Vertragsstaaten:
**DE DK**

(43) Veröffentlichungstag der Anmeldung:
**10.03.1993  Patentblatt 1993/10**

(73) Patentinhaber: **BFW WERNER VÖLK GMBH
D-81208 München (DE)**

(72) Erfinder:
• **Rothe,Karl Werner Dr.rer.nat.
W-8000 München 60 (DE)**

• **Protz,Hubertus Prof.
W-1000 Berlin 19 (DE)**
• **Sturm,Wolfgang
W-1000 Berlin 61 (DE)**

(74) Vertreter: **Zinnecker, Armin, Dipl.-Ing. et al
Lorenz-Seidler-Gossel,
Widenmayerstrasse 23
D-80538 München (DE)**

**Beschreibung**

Die Erfindung betrifft ein Verfahren zur Ermittlung der tatsächlichen Heizleistung (des Wärmeverbrauchs) der Heizkörper einer Einrohrheizung, bestehend aus M parallel durchströmten Strängen mit jeweils N in Serie durchströmten Heizkörpern, an denen jeweils ein Heizkostenverteiler nach dem Verdunstungsprinzip angebracht ist.

In Heizungsanlagen, durch die mehrere Wohnungen versorgt werden, erhebt sich das Problem, die Heizleistung, genauer gesagt den tatsächlichen Wärmeverbrauch, in jeder Wohnung und/ oder für jeden einzelnen Heizkörper zu ermitteln. Zu diesem Zweck sind sogenannte Heizkostenverteiler (HKV) bekannt, die jeweils einem Heizkörper zugeordnet werden, genauer gesagt an diesem Heizkörper angebracht werden. Mit einem Heizkostenverteiler kann der Wärmeverbrauch eines Heizkörpers ermittelt werden.

Die Wärmeabgabe Q eines Heizkörpers kann auf die beiden folgenden Arten angegeben werden:

$$Q = y \times D \times DT \tag{A}$$

$$Q = Qo \times \left(\frac{dt}{dto}\right)n \tag{B}$$

Hierbei bedeuten :

| Formel-buchstabe | Bedeutung | Physikalische Einheit |
|---|---|---|
| Q | Wärmeabgabe des Heizkörpers | Energie |
| y | Wärmekoeffizient, eine in der Praxis konstante Größe | Energie pro Volumen und Temperatur |
| D | Volumen des Heizmediums (Wasser), das in einem bestimmten Zeitraum durch den Heizkörper geflossen ist | Volumen |
| DT | = TV - TR; Temperaturdifferenz | Temperatur |
| TV | Vorlauftemperatur des Heizkörpers | Temperatur |
| TR | Rücklauftemperatur des Heizkörpers | Temperatur |
| Qo | Wärmeabgabe des Heizkörpers im Auslegungsfall (Norm-Heizleistung) | Energie |

| dt | Logarithmische Über-<br>temperatur des Heiz-<br>körpers | Temperatur |
| dto | Logarithmische Über-<br>temperatur des Heiz-<br>körpers im Auslegungs-<br>fall | Temperatur |
| n | Heizkörperexponent | Dimensionslos |

Nach der Formel (A) wird die Wärmeabgabe Q eines Heizkörpers also berechnet aus dem Wärmekoeffizient y, einer in der Praxis konstanten Größe, dem Heizmedium-Volumen (im allgemeinen: Wasser-Volumen), das den Heizkörper während einer bestimmten Zeit (Abrechnungsperiode), beispielsweise einem Jahr, durchströmt hat, und der Temperaturdifferenz zwischen Vorlauftemperatur und Rücklauftemperatur des Heizkörpers.

Nach der zweiten Formel (B) wird die Wärmeabgabe eines Heizkörpers berechnet aus der Wärmeabgabe im Auslegungsfall, der (logarithmischen) Übertemperatur des Heizkörpers, der (logarithmischen) Übertemperatur des Heizkörpers im Auslegungsfall und einem Heizkörperexponenten. Für den "Auslegungsfall" werden vorgegeben: Die Vorlauftemperatur TV, die Rücklauftemperatur TR und die Raumlufttemperatur TL. Im üblichen Auslegungsfall beträgt die Vorlauftemperatur TV 90° C, die Rücklauftemperatur TR 70° C und die Raumlufttemperatur TL 20° C. Dies ist dann der Auslegungsfall "90/70/20". Der Heizkörperexponent n ergibt sich - wie die Norm-Heizleistung Qo - aus Messungen; beide sind für den jeweiligen Heizkörper spezifisch. Typische Werte für n liegen zwischen 1,1 und 1,3.

Heizkostenverteiler arbeiten auf der Basis der Gleichung (B). Elektronische Heizkostenverteiler (HKV-E) versuchen, diese Gleichung (B) mit Hilfe von Temperaturfühlern und eines Mikroprozessors nachzuempfinden. Heizkostenverteiler nach dem Verdunstungsprinzip (HKV-V) nutzen die physikalische Tatsache aus, daß der Dampfdruck einer Flüssigkeit von der Temperatur abhängt. Wenn man also die Abnahme des Flüssigkeitsstandes in einer Ampulle mit Hilfe einer geeignet angebrachten Skala mißt, hat man ein einfaches und zuverlässiges Maß für die integrierte Temperatur und damit für die Wärmeabgabe des Heizkörpers.

Eine quantitative Analyse der soeben beschriebenen Vorgänge zeigt einen prinzipiellen Unterschied zwischen einem Heizkostenverteiler nach dem Verdunstungsprinzip und einem idealen Heizkostenverteiler auf: Betrachtet man die Anzeigen eines Heizkostenverteilers nach dem Verdunstungsprinzip einerseits und eines idealen Heizkostenverteilers andererseits jeweils als Funktion der Temperatur, so weisen Heizkostenverteiler nach dem Verdunstungsprinzip generell eine stärkere Krümmung auf. Hierzu sei auf die beigefügte Zeichnung verwiesen, deren

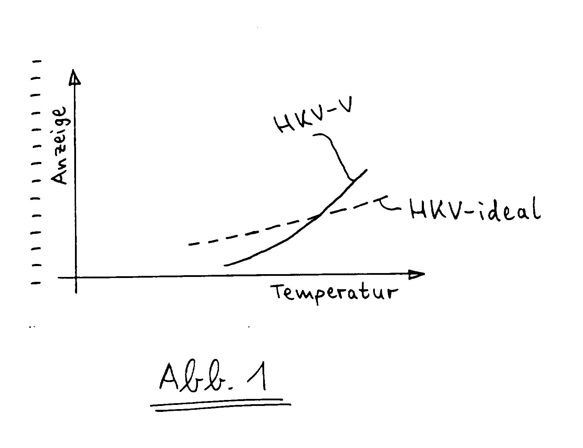

Fig. 1 den Verlauf der Anzeigen eines Heizkostenverteilers nach dem Verdunstungsprinzip und eines idealen Heizkostenverteilers über der Temperatur

zeigt. Auf der waagerechten Achse ist nach rechts die Temperatur aufgetragen, auf der senkrechten Achse die Anzeige des Heizkostenverteilers. Die Kurve des Heizkostenverteilers nach dem Verdunstungsprinzip ist durchgezogen gezeichnet, die Kurve des idealen Heizkostenverteilers ist gestrichelt gezeichnet. Die Kurve des Heizkostenverteilers nach dem Verdunstungsprinzip ist steiler. Beim Heizkostenverteiler nach dem Verdunstungsprinzip findet also bei einer bestimmten Temperatursteigerung eine größere Steigerung der Anzeige statt als beim idealen Heizkostenverteiler. Der prinzipielle Unterschied zwischen einem HKV-V und einem idealen HKV besteht wesentlich in folgendem: Betrachtet man die Anzeigen der Geräte entsprechend der Fig. 1 als Funktion der Temperatur, so weisen HKV-V generell eine stärkere Krümmung auf als ideale HKV, also HKV, die dem oben angegebenen Gesetz (B) gehorchen.

Dieser prinzipielle Unterschied spielt in der Praxis bei Zweirohr-Heizungen (Zweirohrsystemen) keine Rolle, da bei Zweirohr-Heizungen mit gleichen Vorlauftemperaturen gearbeitet wird. Bei Zweirohrsystemen ist also die Vorlauftemperatur für jeden Heizkörper gleich. Bei Zweirohrsystemen gibt es ein Vorlauf-Sammelrohr und ein Rücklauf-Sammelrohr. Durch das Vorlauf-Sammelrohr wird das Heizmedium (Wasser) mit einer bestimmten Vorlauftemperatur den einzelnen Heizkörpern zugeführt, so daß jeder Heizkörper Heizmedium mit im wesentlichen der gleichen Vorlauftemperatur erhält.

Durch die DIN 4713 in ihrer neuesten Fassung und die Praxis der Meßdienstfirmen wird bestätigt, daß der oben erwähnte, prinzipielle Unterschied zwischen HKV-V und idealen HKV in der Praxis keine Rolle spielt, also vernächlässigbar ist.

Die gilt allerdings nicht für Einrohrsysteme, die in den neuen Bundesländern weit verbreitet sind. Bei diesen sogenannten vertikalen Einrohrheizungen wird das Heizmedium nacheinander durch mehrere Heizkörper geschickt. Die Vorlauftemperaturen der verschiedenen Heizkörper unterscheiden sich also voneinander, und zwar in einer nicht vorherbestimmbaren Weise. Der erste Heizkörper, der durchströmt wird, erhält Heizmedium mit der Ausgangs-Vorlauftemperatur. Die Vorlauftemperatur des zweiten Heizkörpers entspricht der Rücklauftemperatur des ersten Heizkörpers. Die Rücklauftemperatur des zweiten Heizkörpers ist wiederum die Vorlauftempertur des dritten Heizkörpers, und so weiter. Die Vorlauftemperatur des i-ten Heizkörpers ist also von der tatsächlichen Heizleistung (Wärmeabgabe) der i - 1 Heizkörper abhängig, die vor dem i-ten Heizkörper durchströmt worden sind. Zur Verdeutlichung verweisen wir auf die Zeichnung, deren

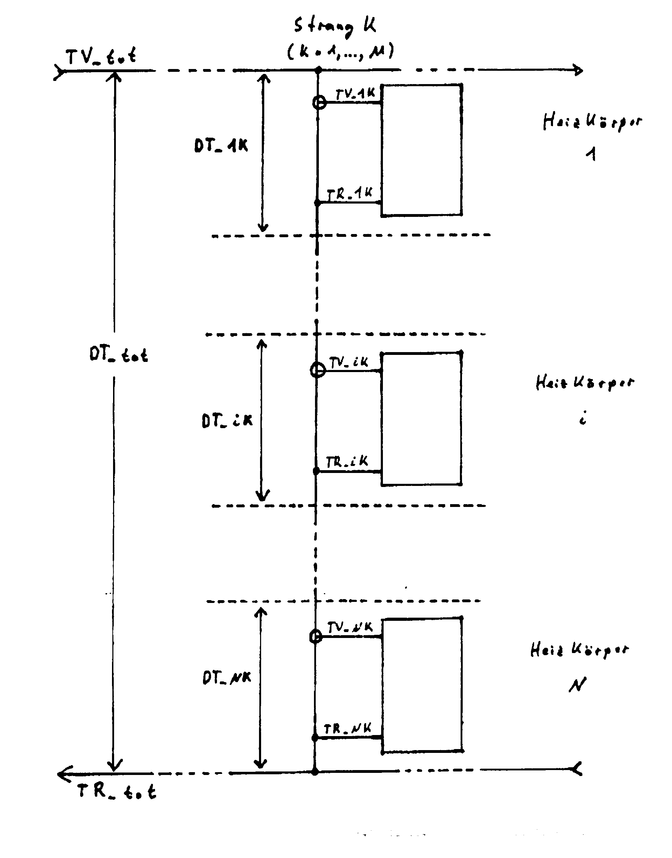

Fig. 2     mehrere Heizkörper, die in einer Einrohrheizung nacheinander durchströmt werden, in einer schematischen Darstellung

zeigt. Wie aus Fig. 2 ersichtlich, treten bei den in Reihe geschalteten Heizkörpern von oben nach unten systematisch sinkende Vorlauftemperaturen auf. In der Einrohrheizung durchströmt das Medium nämlich zunächst ein zentrales Rohr nach oben. Von oben nach unten werden dann die in Reihe geschalteten Heizkörper nacheinander durchströmt. Im allgemeinen ist das zentrale Rohr ein Sammelrohr. Die Heizkörper in den verschiedenen Etagen des Gebäudes werden dann in mehreren parallelen Strängen nacheinander durchströmt. Die Fig. 2 zeigt die Verhältnisse in einem dieser Stränge, nämlich im Strang k.

Hierbei wird davon ausgegangen, daß M Stränge vorhanden sind. Der Strang-Index k läuft also von 1 bis M. Weiterhin wird davon ausgegangen, daß in jedem Strang N Heizkörper vorhanden sind. Der Heizkörper-Index i läuft also von 1 bis N.

Für den i-ten Heizkörper im k-ten Strang lautet folglich der Index ik.

Für den obersten Heizkörper 1 ist die Vorlauftemperatur TV_tot. Diese "totale" Vorlauftemperatur TV_tot ist gleichzeitig die erste Vorlauftemperatur des Stranges, also die Vorlauftemperatur des ersten Heizkörpers TV_1k. Der erste Index "1" (i = 1) betrifft den Heizkörper innerhalb des Strangs, der zweite Index "k" zeigt an, daß es um den k-ten Strang geht.

Die Rücklauftemperatur des ersten Heizkörpers beträgt dementsprechend TR_1k.

Die Temperaturdifferenz des ersten Heizkörpers im k-ten Strang DT_1k errechnet sich demnach wie folgt:

$$DT\_1k = TV\_1k - TR\_1k$$

In entsprechender Weise gilt für den i-ten Heizkörper im Strang k:

$$DT\_ik = TV\_ik - TR\_ik$$

Für den letzten Heizkörper N im k-ten Strang gilt:

$$DT\_Nk = TV\_Nk - TR\_Nk$$

Die totale Temperaturdifferenz DT_tot der Einrohrheizung beträgt

$$DT\_tot = TV\_tot - TR\_tot$$

Die totale Rücklauftemperatur TR_tot ist der Mittelwert der Rücklauftemperaturen der N-ten Heizkörper aller M Stränge.

Oben wurde bereits erwähnt, daß zwischen der Anzeige eines Heizkostenverteilers nach dem Verdunstungsprinzip und der Anzeige eines idealen Heizkostenverteilers ein prinzipieller, systematischer Unterschied besteht. Jeder bekannte systematische Unterschied bzw. jede bekannte systematische Abweichung kann wie folgt korrigiert werden:

$$\text{Korrigierte Anzeige} = Kx \times \text{unkorrigierte Anzeige} \qquad (C)$$

Hierin bedeutet Kx einen dimensionslosen Korrekturfaktor. Dieser dimensionslose Korrekturfaktor Kx berechnet sich nach folgender Formel:

$$Kx = (\text{Anzeige eines idealen HKV})/(\text{Anzeige eines HKV-V}) \qquad (D)$$

Bei bekannten Temperaturen kann der Zähler der Formel (D), also die Anzeige eines idealen HKV, aus Gleichung (B) berechnet werden. Der Nenner der Gleichung (D), also die Anzeige des HKV-V, kann bei Kenntnis der Temperatur (mittleren Heizkörpertemperatur) aus den Konstanten der verwendeten Flüssigkeit und der Ampulle berechnet bzw. ermittelt werden. Dies ist im Stand der Technik allgemein bekannt; es wird beispielsweise beschrieben in der Literaturstelle Joachim Kreuzberg, Handbuch der Heizkostenabrechnung, 2. Auflage, ISBN 3-8041-2445-3; Seiten 187 bis 215.

Ziel der vorliegenden Erfindung ist es, die tatsächliche Heizleistung (Wärmeabgabe) eines Heizkörpers in einer Einrohrheizung unter Verwendung von Heizkostenverteilern nach dem Verdunstungsprinzip (HKV-V) zu ermitteln. Hierfür ist es erforderlich, den Faktor Kx für jeden einzelnen Heizkörper zu ermitteln. Mit diesem Korrekturfaktor Kx für jeden einzelnen Heizkörper kann dann die tatsächliche Heizleistung (Wärmeabgabe) jedes einzelnen Heizkörpers ermittelt werden.

Die Einrohrheizung kann aus einem einzigen Strang bestehen, der aus mehreren hintereinander geschalteten, also nacheinander durchströmten Heizkörpern besteht. Die Einrohrheizung kann aber auch aus mehreren Strängen bestehen, die jeweils parallel durchströmt werden, wobei in jedem einzelnen Strang mehrere Heizkörper vorhanden sind, die nacheinander in Reihe durchströmt werden.

Die Berechnung des Korrekturfaktors Kx ist bei Einrohrheizungen deshalb schwierig, weil die Anzeige der einzelnen Heizkostenverteiler nicht nur vom individuellen Wärmeverbrauch des zugeordneten Heizkörpers, sondern auch von der Vorlauftemperatur des einzelnen Heizkörpers abhängt und weil diese Vorlauftemperatur des einzelnen Heizkörpers bei einer Einrohrheizung von den tatsächlichen Heizleistungen (Wärmeabgaben) der diesem Heizkörper vorgeschalteten Heizkörper abhängt. Mehrverbräuche am Stranganfang, also an den Heizkörpern, die dem zu untersuchenden Heizkörper vorgeschaltet sind, verursachen eine Absenkung der Vorlauftemperatur dieses Heizkörpers und auch eine Absenkung der Vorlauftemperaturen aller nachfolgenden Heizkörper. Minderverbräuche der im Strang vorgeschalteten Heizkörper führen umgekeht zu einem Anstieg der Vorlauftemperatur der nachfolgenden Heizkörper.

Die Verbrauchsanzeige eines Heizkörpers oder einer Wohnung wird also bei einer Einrohrheizung nicht nur vom eigenen Heizverhalten, sondern auch von dem der vorhergehenden Wohnungen und/oder Heizkörper beeinflußt.

Hieraus ergibt sich, daß die Betrachtung irgendwelcher Normzustände (beispielsweise eines Auslegungsfalles, bei dem alle Ventile, die die in den Heizkörper einströmende Menge des Heizmediums regeln, sich in einer bestimmten Position befinden) nicht ausreichend ist. Es muß vielmehr das individuelle Heizverhalten berücksichtigt werden.

Aufgabe der Erfindung ist es, ein Verfahren zur Ermittlung der tatsächlichen Heizleistung (Wärmeabgabe) der Heizkörper einer Einrohrheizung unter Verwendung von Heizkostenverteilern nach dem Verdunstungsprinzip (HKV-V) vorzuschlagen.

Erfindungsgemäß wird diese Aufgabe durch das im Anspruch 1 angegebene Verfahren gelöst. Nach dem erfindungsgemäßen Verfahren werden folgende Verfahrensschritte durchlaufen:

(1) Die im Ermittlungszeitraum von der Einrohrheizung verbrauchte Wärmemenge Q_tot wird ermittelt. Diese Wärmemenge Q_tot kann gemessen, aber auch auf andere Weise ermittelt werden. Der Ermittlungszeitraum beträgt im allgemeinen ein Jahr, kann aber auch kürzer oder länger sein. Die Wärmemenge Q_tot kann beispielsweise von einem üblichen Wärmemengenzähler gemessen werden. Die Wärmemenge Q_tot hat die physikalische Dimension einer Energie.

(2) Das im Ermittlungszeitraum durch die Einrohrheizung geflossene Heizmedium-Volumen (Wasser-Volumen) D_tot wird ermittelt. Dieses Volumen kann von einem üblichen Wärmemengenzähler ebenfalls gemessen werden.

(3) Die gemittelte Temperaturdifferenz DT_tot wird nach der Formel

$$DT\_tot = Q\_tot/(y \times D\_tot)$$

ermittelt. Bei DT_tot handelt es sich um die über die gesamte Heizung und die gesamte Ermittlungsperiode gemittelte Temperaturdifferenz. Die soeben angegebene Formel entspricht der eingangs angegebenen Formel (A), aufgelöst nach DT. Q_tot wurde im Verfahrensschritt (1) ermittelt, D_tot im Verfahrensschritt (2).

(4) Für jeden der ik Heizkörper wird die Wärmeabgabe im Auslegungsfall Qo_ik ermittelt. Die Wärmeabgabe im Auslegungsfall Qo_ik kann aus DIN-Normen (Tabellen) ermittelt werden; sie ist abhängig von der Heizkörperfläche, der Heizkörperform, dem Material und ähnlichem. Sie kann auch als "Normheizleistung" bezeichnet werden.

(5) Die gesamte Wärmeabgabe im Auslegungsfall Qo_tot wird nach der Formel

$$Qo\_tot = \sum_{i=1}^{N} \sum_{k=1}^{M} Qo\_ik$$

ermittelt. Sie kann auch als "Gesamt-Normheizleistung" bezeichnet werden. Sie ist die Summe aller im Verfahrensschritt (4) bestimmten Normheizleistungen Qo_ik.

(6) Die mittlere Übertemperatur im Auslegungsfall dto wird ermittelt. Dies geschieht vorzugsweise nach der Formel

$$dto = \frac{TV - TR}{\ln \dfrac{TV - TL}{TR - TL}}$$

Hierin bedeuten:

TV  Vorlauftemperatur im Auslegungsfall (beispielsweise 90° C)
TR  Rücklauftemperatur im Auslegungsfall (beispielsweise 70° C)
TL  Raumlufttemperatur im Auslegungsfall (beispielsweise 20° C)
In  Natürlicher Logarithmus

Im Auslegungsfall "90/70/20" beträgt die mittlere Übertemperatur dto etwa 59,4° C.

Die mittlere Übertemperatur dt wird nach der Formel

$$Q\_tot = Qo\_tot \left(\frac{dt}{dto}\right) n$$

ermittelt. Diese Formel wird nach dt aufgelöst. Q_tot ist aus dem Verfahrensschritt (1) bekannt, Qo_tot aus dem Verfahrensschritt (5) und dto aus dem Verfahrensschritt (6).

Die mittlere Vorlauftemperatur TV_tot und die mittlere Rücklauftemperatur TR_tot werden aus der mittleren Übertemperatur dt, der Raumlufttemperatur TL und der gemittelten Temperaturdifferenz DT_tot ermittelt.
Dies geschieht vorzugsweise nach den Formeln

$$dt = \frac{TV\_tot - TR\_tot}{\ln\frac{TV\_tot - TL}{TR\_tot - TL}}$$

und

$$DT\_tot = TV\_tot - TR\_tot$$

Die gemittelte Temperaturdifferenz DT_tot ist aus dem Verfahrensschritt (3) bekannt. Die zweite soeben genannte Gleichung liefert einen Zusammenhang (und zwar einen linearen Zusammenhang) zwischen den beiden gesuchten Größen TV_tot und TR_tot. Aus dieser zweiten Gleichung kann also eine dieser beiden gesuchten Größen eliminiert werden. Eingesetzt in die erste soeben genannte Gleichung kann also eine der beiden Größen TV_tot oder TR_tot ermittelt werden. In der ersten Gleichung ist dt aus dem Verfahrensschritt (7) bekannt, TL (die Raumlufttemperatur) wird beispielsweise zu 20° C angenommen. In ist wiederum der natürliche Logarithmus.
Statt der soeben an erster Stelle genannten Formel kann auch die Näherungsformel

$$dt = \frac{TV + TR}{2} - TL$$

verwendet werden.

(9) Das im Ermittlungszeitraum durch jeden der M Stränge geflossene Heizmittel-Volumen (Wasser-Volumen) D_k wird ermittelt, beispielsweise aus den Rohrdurchmessern oder nach der Formel

$$D\_k = D\_tot/M$$

Wenn durch alle Stränge dasselbe Heizmittel-Volumen geflossen ist, ist diese Formel exakt, andernfalls ist sie eine Näherungsformel.

(10) Für alle Korrekturfaktoren Kx_ik werden Ausgangswerte festgelegt, vorzugsweise der Wert 1. Es gilt also Kx_ik = 1 für alle ik, wobei i von 1 bis N läuft und k von 1 bis M.
Nun beginnt die Iteration für Kx_ik:

(11) Für jeden einzelnen Heizkörper ik werden die Verbrauchswerte q_ik (die ein Maß für die verbrauchte Wärmemenge sind) aus der Heizkostenverteileranzeige a_ik nach der Formel

$$q\_ik = Kx\_ik \times a\_ik$$

ermittelt. Die Heizkostenverteiler-Anzeige a_ik für jeden einzelnen Heizkostenverteiler wird abgelesen. Die genannte Formel gilt im Falle einer Produktskala. Im Falle einer Einheitsskala muß dieser Wert noch mit dem Faktor K_ik multipliziert werden. Der Faktor K_ik ist für den jeweiligen Heizkörper und den jeweiligen Heizkostenverteiler spezifisch. Nach der DIN 4713 errechnet er sich nach der Formel

$$K\_ik = Kq \times Kc \times Kt \times Ka$$

(12) Für jeden einzelnen Heizkörper wird die Temperaturdifferenz DT_ik nach der Formel

$$DT\_ik = \frac{D\_tot \times DT\_tot}{D\_k \times S(q)} \times q\_ik$$

ermittelt, wobei S(q) nach der Formel

$$S(q) = \sum_{k=1}^{M} \sum_{i=1}^{N} q\_ik$$

ermittelt wird. D_tot ist aus dem Verfahrensschritt (2) bekannt, DT_tot aus dem Verfahrensschritt (3), D_k aus dem Verfahrensschritt (9) und q_ik aus dem Verfahrensschritt (11).

Die beiden soeben genannten Formeln ermitteln sich aus folgenden Zusammenhängen: Da die Verbrauchswerte q_ik direkt proportional zur tatsächlichen Heizleistung (Wärmeabgabe) Q_ik des Heizkörpers sind (die Heizleistung hat die Dimension einer Energie, da sie während der Ermittlungsperiode betrachtet wird), ergibt sich wegen

$$Q\_ik = y \times D\_k \times DT\_ik$$

der Zusammenhang:

$$q\_ik \sim D\_k \times DT\_ik$$

Aus der Definition

$$S(q) = \sum_{k=1}^{M} \sum_{i=1}^{N} q\_ik$$

und der Formel

$$\sum_{k=1}^{M} \sum_{i=1}^{N} D\_k \times DT\_ik = D\_tot \times DT\_tot$$

ergibt sich die oben an erster Stelle genannte Formel.

(13) Für jeden einzelnen Heizkörper wird die Vorlauftemperatur TV_ik und die Rücklauftemperatur TR_ik nach den Formeln

$$TV\_1k = TV\_tot$$
$$TR\_ik = TV\_ik - DT\_ik$$
$$TV\_i+1,k = TR\_ik$$

ermittelt. Die Vorlauftemperatur des ersten Heizkörpers im k-ten Strang ist gleich der (aus dem Verfahrensschritt (8) bekannten) mittleren Vorlauftemperatur TV_tot. Für den ersten Heizkörper ergibt sich die Rücklauftemperatur TR_ik aus der oben an zweiter Stelle genannten Formel wie folgt:

$$TR\_1k = TV\_1k - DT\_1k$$

TV_1k ist aus der vorhergehenden Formel bekannt, DT_1k aus dem Verfahrensschritt (12).

Die Vorlauftemperatur des nächsten Heizkörpers im k-ten Strang ergibt sich aus der dritten obengenannten Formel. Für den zweiten Heizkörper gilt:

$$TV\_2k = TR\_1k$$

Hiervon ausgehend wird wiederum die zweite obengenannte Formel angewendet, u.s.w., bis Vorlauftemperatur TV und Rücklauftemperatur TR für alle N-Heizkörper des k-ten Stranges ermittelt worden sind.

(14) Für jeden einzelnen Heizkörper wird die Übertemperatur dt_ik aus der Vorlauftemperatur TV_ik, der Rücklauftemperatur TR_ik und der Lufttemperatur TL ermittelt. Dies geschieht vorzugsweise nach der Formel

$$dt\_ik = \frac{TV\_ik - TR\_ik}{\ln \dfrac{TV\_ik - TL}{TR\_ik - TL}}$$

Statt dessen kann auch die Näherungsformel

$$dt\_ik = \frac{TV\_ik + TR\_ik}{2} - TL$$

angewendet werden.

(15) Für jeden einzelnen Heizkörper wird die Heizleistung (abgegebene Wärmemenge) Q_ik nach der Formel

$$Q\_ik = Qo\_ik \ (\frac{dt\_ik}{dto})n$$

ermittelt. Die Heizleistung hat die physikalische Dimension einer Energie, da sie auf den Ermittlungszeitraum bezogen ist.

(16) Für jeden einzelnen Heizkörper wird aus der Heizleistung Q_ik, daß heißt der Anzeige eines idealen Heizkostenverteilers, und der Anzeige eines HKV-V, gemäß der Formel (D) der Korrekturfaktor Kx_ik ermittelt. Die Anzeige des HKV-V kann aus den Konstanten der verwendeten Flüssigkeit und der Ampulle sowie aus der mittleren Heizkörpertemperatur dt_ik + TL berechnet bzw. ermittelt werden. Dies ist im Stand der Technik allgemein bekannt; es wird beispielsweise beschrieben in der Literaturstelle Joachim Kreuzberg, Handbuch der Heizkostenabrechnung, 2. Auflage, ISBN 3-8041-2445-3; Seiten 187 bis 215. Vorzugsweise werden die Korrekturfaktoren Kx_ik anschließend normiert, beispielsweise auf den Mittelwert 1.

(17) Die Abweichungen der neu ermittelten Werte der Korrekturfaktoren Kx_ik von den im vorhergehenden Durchlauf ermittelten Werten der Korrekturfaktoren Kx_ik (beim ersten Durchlauf sind dies die Ausgangswerte der Kx_ik) werden ermittelt. Wenn diese Abweichungen größer sind als ein vorgegebener Grenzwert, wird das Verfahren ab dem Verfahrensschritt (11) wiederholt. Andernfalls wird die Iteration beendet. Es sind dann alle Korrekturfaktoren Kx_ik ermittelt, so daß für jeden Heizkörper auch die tatsächliche Heizleistung (Wärmeverbrauch) bekannt ist. Als Ende-Kriterium für die Iteration von Kx_ik kann beispielsweise ein Abweichung von 2 % angewendet werden. Es kann der Durchschnitt aller Kx_ik verwendet werden. Es ist aber auch möglich, bei jedem Iterationsdurchlauf die größte Differenz (Kx_ik)_(n) - (Kx_ik)_(n-1) zu bilden und die Iteration dann abzubrechen, wenn diese Differenz unter einem vorherbestimmten Grenzwert liegt. Wie oben angegeben, kann die Iteration natürlich auch nach dem ersten Durchlauf beendet werden, wenn die mit diesem ersten Durchlauf erzielte Genauigkeit ausreicht.

Vorstehend wurde das erfindungsgemäße Verfahren für M Stränge beschrieben, die aus jeweils N Heizkörpern bestehen. Es ist natürlich auch möglich, dieses Verfahren nur bei einem einzigen Strang durchzuführen. Dann gilt: M = 1. Die einzelnen Verfahrensschritte sind nach wie vor anwendbar.

Nach der Erfindung können bei Einrohrheizungen unter Verwendung von Heizkostenverteilern nach dem Verdunstungsprinzip Korrekturfaktoren ermittelt werden, die dem individuellen Heizverhalten Rechnung tragen. Dies ist besonders wichtig, weil die Anzeige der HKV-V nicht nur vom individuellen Wärmeverbrauch, sondern auch von der Vorlauftemperatur der einzelnen Heizkörper abhängt.

Das erfindungsgemäße Verfahren liefert die über den Meßzeitraum gemittelten Temperaturen jedes einzelnen Heizkörpers oder - durch Zusammenfassung der einzelnen Heizkörper - jeder einzelnen Wohnung. Voraussetzung hierzu sind lediglich die Kenntnis der mittleren Strangvorlauftemperatur, der Strangrücklauftemperatur und des Strangdurchflusses (resultierend aus der Anzeige eines Wärmemengenzählers) sowie die Meßergebnisse der an den Heizkörpern befindlichen Heizkostenverteiler. Hieraus kann nach dem erfindungsgemäßen Verfahren für jeden Heizkörper der Korrekturfaktor Kx_ik ermittelt werden.

Es wird eine Abrechnungseinheit betrachtet, die aus N Etagen besteht. Jede Etage besteht im allgemeinen aus mehreren Wohnungen und/oder aus mehreren Heizkörpern. Die Heizkörper der einzelnen Etagen werden aus M Strängen versorgt. Der Gesamtwärmeverbrauch Q_tot der Abrechnungseinheit im Abrechnungszeitraum wird von einem Wärmemengenzähler gemessen, der gleichzeitig auch den gesamten Volumenstrom D_tot erfaßt hat.

Hieraus läßt sich dann nach der Gleichung (A) die mittlere Gesamttemperaturspreizung DT_tot der Temperatur berechnen, und zwar nach dem Verfahrensschritt (3).

Da die Normheizleistung Qo jedes einzelnen Heizkörpers bekannt ist, liefert ein Vergleich der gesamten Normheizleistung in der Abrechnungseinheit Qo_tot mit dem tatsächlichen Wärmeverbrauch Q_tot die mittlere Übertemperatur dt_tot, aus der sich wiederum gemäß dem obigen Verfahrensschritt (8) bei bekanntem TL und DT_tot = TV_tot - TR_tot die Werte für TV_tot und TR_tot ermitteln lassen.

Damit sind die Mittelwerte der Gesamtvorlauftemperatur TV_tot, der Gesamtrücklauftemperatur TR_tot und des Gesamtdurchflusses D_tot, jeweils über den Abrechnungszeitraum, bekannt. Der Durchfluß durch jeden Einzelstrang D_k (k läuft von 1 bis M) läßt sich entweder über die bekannten Rohrdurchmesser oder pauschal über D_k = D_tot/M ermitteln. Eine hohe Genauigkeit ist hier nicht erforderlich, da die letztlich interessanten Mittelwerte über eine Wohnung hiervon kaum berührt werden.

Nunmehr beginnt das iterative Verfahren zur Bestimmung von Kx_ik für jeden einzelnen Heizkörper i (i läuft von 1 bis N) des Stranges k (k läuft von 1 bis M). Man beginnt mit Kx_ik = 1 oder ähnlich plausiblen Annahmen (z.B. durch eine Betrachtung des Auslegungszustandes) und ermittelt aus den Verbrauchswerten q_ik jedes einzelnen Heizkörpers den Temperaturabfall DT_ik über diesen Heizkörper. Damit sind dann sämtliche Temperaturen bekannt, die zur Ermittlung des neuen Kx_ik benötigt werden. Sollte dies noch nicht genau genug sein, wird die Iteration für Kx_ik ein weiteres Mal durchlaufen.

**Patentansprüche**

1. Verfahren zur Ermittlung der tatsächlichen Heizleistung, bzw. des Warmeverbrauchs, der Heizkörper einer Einrohrheizung, bestehend aus M parallel durchströmten Strängen mit jeweils N in Serie durchströmten Heizkörpern, an denen jeweils ein Heizkostenverteiler nach dem Verdunstungsprinzip angebracht ist, bei dem folgende Verfahrensschritte durchgeführt werden:

    (1) Die im Ermittlungszeitraum von der Einrohrheizung verbrauchte Wärmemenge $Q\_tot$ wird ermittelt;

    (2) das im Ermittlungszeitraum durch die Einrohrheizung geflossene Heizmedium-Volumen $D\_tot$ wird ermittelt;

    (3) die gemittelte Temperaturdifferenz $DT\_tot$ wird nach der Formel
    $$DT\_tot = Q\_tot/(y \times D\_tot)$$
    ermittelt;

    (4) für jeden der Heizkörper wird die Wärmeabgabe im Auslegungsfall $Qo\_ik$ ermittelt;

    (5) die gesamte Wärmeabgabe im Auslegungsfall $Qo\_tot$ wird nach der Formel

    $$Qo\_tot = \sum_{i=1}^{N} \sum_{k=1}^{M} Qo\_ik$$

    ermittelt;

    (6) die mittlere Übertemperatur im Auslegungsfall $dto$ wird ermittelt;

    (7) die mittlere Übertemperatur $dt$ wird nach der Formel
    $$Q\_tot = Qo\_tot \, (\frac{dt}{dto})n$$
    ermittelt;

    (8) die mittlere Vorlauftemperatur $TV\_tot$ und die mittlere Rücklauftemperatur $TR\_tot$ werden aus der mittleren Übertemperatur $dt$, der Raumlufttemperatur $TL$ und der aus dem Verfahrensschritt 3 bekannten gemittelten Temperaturdifferenz $DT\_tot = TV\_tot - TR\_tot$ ermittelt;

    (9) das im Ermittlungszeitraum durch jeden der M Stränge geflossene Heizmittel-Volumen $D\_k$ wird ermittelt;

    (10) für alle Korrekturfaktoren $Kx\_ik$ werden Ausgangswerte festgelegt, vorzugsweise 1;

    (11) für jeden einzelnen Heizkörper werden die Verbrauchswerte $q\_ik$ aus der Heizkostenverteiler-Anzeige $a\_ik$ nach der Formel
    $$q\_ik = Kx\_ik \times a\_ik$$
    ermittelt;

    (12) für jeden einzelnen Heizkörper wird die Temperaturdifferenz $DT\_ik$ nach der Formel
    $$DT\_ik = \frac{D\_tot \times DT\_tot}{D\_k \times S(q)} \times q\_ik$$
    ermittelt, wobei $S(q)$ nach der Formel

    $$S(q) = \sum_{k=1}^{M} \sum_{i=1}^{N} q\_ik$$

ermittelt wird;

(13) für jeden einzelnen Heizkörper wird die Vorlauftemperatur TV_ik und die Rücklauftemperatur TR_ik nach den Formeln

$$TV\_1k = TV\_tot$$
$$TR\_ik = TV\_ik - DT\_ik$$
$$TV\_i+1,k = TR\_ik$$

ermittelt;

(14) für jeden einzelnen Heizkörper wird die Übertemperatur dt_ik aus der Vorlauftemperatur TV_ik, der Rücklauftemperatur TR_ik und der Raumlufttemperatur TL ermittelt;

(15) für jeden einzelnen Heizkörper wird die tatsächliche Heizleistung (Wärmeverbrauch) Q_ik nach der Formel

$$Q\_ik = Qo\_ik \; (\frac{dt\_ik}{dto})n$$

ermittelt;

(16) für jeden einzelnen Heizkörper wird mit der Heizleistung Q_ik der Korrekturfaktor Kx_ik nach der Formel
$$Kx\_ik = (\text{Anzeige eines idealen HKV})/(\text{Anzeige eines HKV-V})$$
ermittelt;

(17) die Abweichungen der neu ermittelten Werte von Kx_ik von den im vorhergehenden Durchlauf ermittelten Werten von Kx_ik (beim ersten Durchlauf: Von den Ausgangswerten der Kx_ik) werden ermittelt; wenn diese Abweichungen größer sind als ein vorgegebener Grenzwert, wird das Verfahren ab dem Verfahrensschritt 11 wiederholt.

2. Verfahren nach Anspruch 1, dadurch gekennzeichnet, daß im Verfahrensschritt 8 die mittlere Vorlauftemperatur TV_tot und die mittlere Rücklauf TR_tot nach den Formeln

$$dt = \frac{TV\_tot - TR\_tot}{\ln \dfrac{TV\_tot - TL}{TR\_tot - TL}}$$

und

$$DT\_tot = TV\_tot - TR\_tot$$

ermittelt werden.

3. Verfahren nach Anspruch 1, dadurch gekennzeichnet, daß im Verfahrensschritt 8 die mittlere Vorlauftemperatur TV_tot und die mittlere Rücklauftemperatur TR_tot nach den Formeln

$$dt = \frac{TV\_tot + TR\_tot}{2} - TL$$

und

$$DT\_tot = TV\_tot - TR\_tot$$

ermittelt werden.

4. Verfahren nach einem der vorhergehenden Ansprüche, dadurch gekennzeichnet, daß im Verfahrensschritt (14) die Übertemperatur dt_ik nach der Formel

$$dt\_ik = \frac{TV\_ik - TR\_ik}{\ln \dfrac{TV\_ik - TL}{TR\_ik - TL}}$$

ermittelt wird.

5. Verfahren nach einem der Ansprüche 1 bis 3, dadurch gekennzeichnet, daß im Verfahrensschritt 14 die Übertemperatur dt_ik nach der Näherungsformel

$$dt\_ik = \frac{TV\_ik + TR\_ik}{2} - TL$$

ermittelt wird.

**Claims**

1. Method for determining the actual heat output and heat consumption of the radiators of a one-pipe heating system, consisting of M parallel-flow trains each with N serial-flow radiators, attached to each of which is a heating cost distribution metering device (HCD) operating according to the evaporation principle, in which method the following steps are performed:

   (1) the total quantity of heat Q_tot consumed by the one-pipe heating system during the calculation period is determined;

   (2) the volume of heating medium D_tot flowing through the one-pipe heating system during the calculation period is determined;

   (3) the average temperature difference DT_tot is determined by the formula
   $$DT\_tot = Q\_tot/(y \times D\_tot);$$

   (4) for each of the radiators, the heat output in the as-designed condition Qo_ik is determined;

   (5) the total heat output in the as-designed condition Qo_tot is determined by the formula

   $$Qo\_tot = \sum_{i=1}^{N} \sum_{k=1;}^{M} Qo\_ik$$

   (6) the mean excess temperature in the as-designed condition dto is determined;

   (7) the mean excess temperature dt is determined by the formula

   $$Q\_tot = Qo\_tot \left(\frac{dt}{dto}\right)n$$

   (8) the mean flow temperature TV_tot and the mean return temperature TR_tot are determined from the mean excess temperature dt, the ambient air temperature TL and the temperature difference DT_tot = TV_tot - TR_tot known from calculation step 3;

   (9) the volume of heating medium D_k flowing through each of the M trains during the calculation period is determined;

   (10) initial values, preferably 1, are assigned to all correction factors Kx_ik;

   (11) for each individual radiator, the consumption values q_ik are determined from the heating cost distribution meter reading a_ik by the formula
   $$q\_ik = Kx\_ik \times a\_ik;$$

   (12) for each individual radiator, the temperature differential DT_ik is calculated by the formula
   $$DT\_ik = \frac{D\_tot \times DT\_tot}{D\_k \times S(q)} \times q\_ik$$
   wherein S(q) is determined by the formula

   $$S(q) = \sum_{k=1}^{M} \sum_{i=1;}^{N} q\_ik$$

   (13) for each individual radiator, the flow temperature TV_ik and the return temperature TR_ik are determined by the formulae

$$TV\_1k = TV\_tot$$
$$TR\_ik = TV\_ik - DT\_ik$$
$$TV\_i + 1,k = TR\_ik;$$

(14) for each individual radiator, the excess temperature dt_ik is determined from the flow temperature TV_ik, the return temperature TR_ik and the ambient air temperature TL;

(15) for each individual radiator, the actual heat output (heat consumption) Q_ik is determined by the formula

$$Q\_ik = Qo\_ik \left(\frac{dt\_ik}{dto}\right)n$$

(16) for each individual radiator, the correction factor Kx_ik is determined together with the heat output Q_ik by the formula

$$Kx\_ik = (\text{Reading of an ideal HCD}) / (\text{Reading of an HCD-V});$$

(17) the variations of the newly determined values for Kx_ik from the values for Kx_ik calculated in the previous calculation run (in the case of the first calculation run, the variations from the initial values for Kx_ik) are determined; if these variations are greater than a predetermined limit value, the process is repeated from step 11.

2. Method according to Claim 1, characterised in that, at process step 8, the average flow temperature TV_tot and the average return temperature TR_tot are calculated by the formulae

$$dt = \frac{TV\_tot - TR\_tot}{\ln\dfrac{TV\_tot - TL}{TR\_tot - TL}}$$

and

$$DT\_tot = TV\_tot - TR\_tot.$$

3. Method according to Claim 1, characterised in that, at calculation step 8, the average flow temperature TV_tot and the average return temperature TR_tot are calculated by the formulae

$$dt = \frac{TV\_tot + TR\_tot}{2} - TL$$

and

$$DT\_tot = TV\_tot - TR\_tot.$$

4. Method according to one of the preceding Claims, characterised in that, at calculation step 14, the excess temperature dt_ik is determined by the formula

$$dt\_ik = \frac{TV\_ik - TR\_ik}{\ln\dfrac{TV\_ik - TL}{TR\_ik - TL}}$$

5. Method according to one of Claims 1 to 3, characterised in that, at calculation step 14, the excess temperature dt_ik is determined by the approximation formula

$$dt\_ik = \frac{TV\_ik + TR\_ik}{2} - TL$$

**Revendications**

1. Procédé pour la détermination du rendement calorifique effectif ou de la consommation de chaleur des radiateurs d'un chauffage monotubulaire, consistant en M trains à flux parallèle comportant chacun N radiateurs à flux sériel dont chacun est muni d'un distributeur de coûts de chauffage selon le principe de l'évaporation, dans lequel les étapes suivantes sont exécutées :

(1) la quantité de chaleur Q_tot consommée pendant la période de calcul par le chauffage monotubulaire est déterminée;

(2) le volume du milieu chauffant D_tot qui a traversé le chauffage monotubulaire pendant la période de calcul est déterminé;

(3) la moyenne de différence de température DT_tot est déterminée selon la formule

$$DT\_tot = Q\_tot/(y \times D\_tot);$$

(4) pour chaque radiateur est déterminé le débit de chaleur dans la réalisation concrète Qo_ik;

(5) le débit de chaleur total dans la réalisation concrète Qo_tot est déterminé selon la formule

$$Qo\_tot = \sum_{i=1}^{N} \sum_{k=1;}^{M} Qo\_ik$$

(6) l'excès de température moyenne est déterminé dans la réalisation concrète;

(7) l'excès de température moyenne est déterminé selon la formule

$$Q\_tot = Qo\_tot \left(\frac{dt}{dto}\right)n$$

(8) la température d'alimentation moyenne TV_tot et la température de retour moyenne TR_tot sont déterminées à partir de l'excès de température moyenne DT, de la température ambiante TL et de la différence de température moyenne DT_tot = TV_tot - TR_tot connue de l'étape 3 du procédé;

(9) le volume du milieu chauffant qui a traversé chacun des M trains est déterminé dans la période de calcul;

(10) des valeurs initiales, de préférence 1, sont fixées pour tous les facteurs de correction Kx_ik;

(11) pour chacun des divers radiateurs, les valeurs de consommation q_ik sont déterminées à partir de l'indication du distributeur de coûts de chauffage a_ik selon la formule

$$q\_ik = Kx\_ik \times a\_ik$$

(12) pour chacun des divers radiateurs la différence de température DT_ik est déterminée selon la formule

$$DT\_ik = \frac{D\_tot \times DT\_tot}{D\_k \times S(q)} \times q\_ik$$

S(q) étant déterminé selon la formule

$$S(q) = \sum_{k=1}^{M} \sum_{i=1;}^{N} q\_ik$$

(13) pour chacun des divers radiateurs la température d'alimentation TV_ik et la température de retour TR_ik sont déterminées selon les formules

$$TV\_1k = TV\_tot$$
$$TR\_ik = TV\_ik - DT\_ik$$
$$TV\_i+1,k = TR\_ik;$$

(14) pour chacun des divers radiateurs l'excès de température dt_ik est déterminé à partir de la température d'alimentation TV_ik, de la température de retour TR_ik et de la température ambiante RL;

15. pour chacun des divers radiateurs la puissance calorifique effective (consommation de chaleur) Q_ik est déterminée selon la formule

$$Q\_ik = Qo\_ik \left(\frac{dt\_ik}{dto}\right)n$$

(16) pour chacun des divers radiateurs le facteur de correction Kx_ik est déterminé ensemble avec la puissance calorifique Q_ik selon la formule

Kx_ik = (indication d'un DCC idéal)/ indication d'un DCC-V)

(17) les écarts des valeurs nouvellement déterminées de Kx_ik par rapport aux valeurs de Kx_ik déterminées au passage de calcul précédent (au premier passage : par rapport aux valeurs initiales des Kx_ik) sont déterminés; si ces écarts sont supérieurs à une valeur limite prédéterminée, le procédé est répété à partir de l'étape 11 du procédé.

2. Procédé selon la revendication 1, caractérisé en ce que dans l'étape 8 du procédé la température d'alimentation moyenne TV_tot et la température de retour moyenne TR_tot sont déterminées selon les formules

$$dt = \frac{TV\_tot - TR\_tot}{\ln\dfrac{TV\_tot - TL}{TR\_tot - TL}}$$

et

$$DT\_tot = TV\_tot - TR\_tot.$$

3. Procédé selon la revendication 1, caractérisé en ce que dans l'étape 8 du procédé la température d'alimentation moyenne TV_tot et la température moyenne de retour TR_tot sont déterminées selon les formules

$$dt = \frac{TV\_tot + TR\_tot}{2} - TL$$

et

$$DT\_tot = TV\_tot - TR\_tot.$$

4. Procédé selon l'une quelconque des revendications précédentes, caractérisé en ce que dans l'étape 14 du procédé l'excès de température dt_ik est déterminé selon la formule

$$dt\_ik = \frac{TV\_ik - TR\_ik}{\ln\dfrac{TV\_ik - TL}{TR\_ik - TL}}$$

5. Procédé selon l'une quelconque des revendications 1 à 3, caractérisé en ce que dans l'étape 14 du procédé l'excès de température dt_ik est déterminé selon la formule d'approximation

$$dt\_ik = \frac{TV\_ik + TR\_ik}{2} - TL$$

Abb. 1